# EUROPEAN PATENT APPLICATION

(11) **EP 0 771 986 A1**
(43) Date of publication of application: **07.05.1997**
(21) Application number: 96203013.6
(22) Date of filing: 29.10.1996
(51) Int. Cl.: F16L 13/11

(54) **High-strength pipe socket**

(30) Priority: 06.11.1995 NL 1001580
(71) Applicant: WAVIN B.V., NL-8011 CW Zwolle (NL)
(72) Inventor: Offringa, Oege René, 7772 JE Hardenberg (NL)
(74) Representative: Barendregt, Frank, Drs.

(57) **Abstract**

A pipe socket (1) which is suitable to be connected to one end of a pipeline, using at least two sealing elements (2,3) which are located at an axial distance from one another, is described. The pipe socket (1) has a shape which is such that, when an interaction between the pipe socket and the end of a pipeline is realised, at least one essentially closed chamber is formed, which is delimited by the outer wall of the pipeline and the inner wall of the pipe socket. This chamber is provided in the region close to each of the sealing elements with an opening in the wall of the pipe socket and can, in order to form a joint, be filled via a first opening (4) with a liquid adhesive which is solid under the operating conditions, it being possible for air and excess adhesive to escape via a second opening (5). The pipe socket comprises means (9, 6) which determine the direction of flow and which make it possible for adhesive to fill the essentially closed chamber essentially completely, starting at the location of the first opening (4).

A pipe joint and an assembly of pipe parts and/or components using a pipe joint of this kind are likewise described, in which the abovementioned pipe socket is used.

Finally, a method for producing an assembly of pipe parts is described, in which the abovementioned pipe socket is used.

## Description

The present invention relates to a pipe socket which can be connected to one end of a pipeline using at least two sealing elements which are positioned at an axial distance from one another and which can engage on the outer wall of the end of the pipeline, the pipe socket having a shape which is such that, when interaction between the pipe socket and the end of the pipeline is realised, at least one essentially closed chamber is formed, which is delimited in the radial direction by the outer wall of the pipeline and the inner wall of the pipe socket and which is provided, in the region close to each of the sealing elements, with an opening in the wall of the pipe socket, and which chamber, for the purpose of forming a joint, can be at least partially filled via a first opening with a liquid adhesive which is solid under the operating conditions of the pipeline, while it is possible for air and any excess of adhesive to escape via a second opening.

A pipe socket of this kind is disclosed by Dutch Laid-Open Application 7,810,585. When the pipe socket is connected to the end of a pipeline, the latter is pushed into the pipe socket in a clamping manner. In this way an essentially closed chamber, which is delimited by the inside of the pipe socket, the outside of the pipeline and the two sealing rings, is formed between the inside of the pipe socket and the outside of the pipeline. The chamber is filled with adhesive via the opening in the pipe socket in the region close to one of the sealing rings, in order to fix and seal the pipe joint. The other opening in the pipe socket, in the region close to the other sealing ring, serves as an air vent, in order to allow the air present in the chamber to escape, and as an indicator, in order to indicate, when adhesive escapes from the opening, that the essentially closed chamber is "full". In this case, the two openings are situated diagonally with respect to the centre line of the pipe socket.

However, the abovementioned pipe socket has the considerable drawback that, when the adhesive is introduced through one opening into the essentially closed chamber, the adhesive tends to run via the path of least resistance to the other opening and flow out of it. As a result, the air present in the chamber cannot escape through the air vent in a controlled manner, which may lead to the adhesive sealing off a space which is filled with air, which space afterwards can no longer be filled with adhesive. This is a significant drawback, in view of the fact that the adhesive bond between the pipe socket and the end of a pipeline may have to meet very high requirements, in particular with respect to the tensile strength. In order to satisfy these requirements, it is necessary for essentially the entire chamber to be filled with adhesive, while no air should be trapped. In addition, the abovementioned type of adhesive bond has the disadvantage that injection has to be carried out from the underside, which is a problem for a line lying on the ground or in a trench. Moreover, extra provisions have to be made to prevent adhesive running out of one of the holes after injection.

The object of the present invention is to avoid the abovementioned disadvantages, and to this end it is characterized in that the pipe socket comprises means which determine the direction of flow and which make it possible for the essentially closed chamber to be filled gradually and essentially completely with adhesive, starting at the location of the first opening.

The idea behind this solution is that the path of least resistance is actually determined artificially, by the means which determine the direction of flow. The means which determine the direction of flow ensure that the adhesive first of all fills the essentially closed chamber at the level of the first opening and then gradually fills the remaining part of the chamber. The adhesive thus fills the essentially closed chamber in a controlled manner and the air present in this chamber can also escape in a gradual and controlled manner, so that the possibility of the adhesive sealing off a space which is filled with air is avoided.

In a first preferred embodiment, the means which determine the direction of flow comprise a groove formed between the openings in the inner wall of the pipe socket, in which groove a third sealing element is incorporated which can engage on the outer wall of the end of the pipeline, which sealing element divides the essentially closed chamber into a first part and a second part, the sealing element at least being provided with a passage opening, so that the first part and the second part of the essentially closed chamber are connected to one another.

Due to the presence of the third sealing element, the adhesive can flow only through the first part of the essentially closed chamber after having been introduced. Only when the adhesive has reached at the passage opening, it can flow into the second part. The position of the passage opening with respect to the first opening in the wall of the pipe socket therefore determines the extent to which the first part of the essentially closed chamber is filled before the second part is filled with adhesive.

In a subsequent preferred embodiment, the free radial cross-section of the essentially closed chamber decreases in the direction of the second opening in the wall of the pipe socket.

If the free radial cross-section of the essentially closed chamber decreases in the axial direction between the inlet opening for adhesive and the air vent, it is possible for the chamber to be filled virtually completely, without air being trapped. The decrease in the free radial cross-section determines the direction of flow, since on introduction of adhesive into the essentially closed chamber the adhesive will first of all fill that part of the chamber which has the largest radial cross-section, owing to the low resistance which is found here. Only then will the adhesive flow into the parts having a smaller cross-section. Both the pipe socket according to claim 1 and the pipe socket according to claim 2, in which a third sealing element is incorporated, may be designed with a free radial cross-section of the closed chamber which decreases in the direction of the second opening in the wall of the pipe socket.

In an advantageous embodiment, the free radial cross-section of the essentially closed chamber decreases stepwise in the direction of the second opening.

In particular, the first and the second openings in the wall of the pipe socket lie on a generatrix of the pipe socket.

The advantage of the openings having such a position is that, during the joining of the pipe socket to the end of a pipeline, both the one opening for the introduction of the adhesive and the other vent and indication opening are easily accessible and visible, respectively. This applies in particular if the pipe socket is used in lines in trenches in the ground or other locations which are difficult to gain access to.

If the means which determine the direction of flow comprise a groove which is formed in the inner wall of the pipe socket and has a third sealing element present therein, the passage opening of this sealing element preferably lies essentially diametrically opposite to the first and the second openings in the wall of the pipe socket.

In that case, the adhesive which is introduced through the first opening first of all has to fill virtually the entire first part of the essentially closed chamber before it reaches the passage opening in the third sealing ring and can flow through to the second part of the essentially closed chamber. When the adhesive has reached the second part, it has to flow, under the influence of pressure, from the bottom to the top of the pipe socket, where the flow of adhesive out of the second opening in the wall of the pipe socket indicates that the second part of the essentially closed chamber is also virtually completely full. Under the influence of the hydrostatic pressure which has built up as a result of the force of gravity, the chamber is hereby filled uniformly from the bottom to the top.

Advantageously, the pipe socket is produced essentially from a plastic, selected from the group consisting of polyvinyl chloride, polypropene and polyethene.

In a particular embodiment, the pipe socket is designed as a double pipe socket.

In the event of such a design of the pipe socket, the latter can be used to join two ends of a pipeline to one another.

The present invention also relates to a pipe joint, comprising a pipe socket at the end of a first plastic pipe or component and an insertion end at the end of a second plastic pipe or component, using at least two sealing elements which are located at an axial distance from one another and can engage on the outer wall of the end of the second plastic pipe or component. A pipe joint of this kind is characterized in that the pipe socket is a pipe socket according to one of the embodiments of the present invention and the essentially closed chamber which is formed on joining the pipe socket to the end of a pipeline is essentially completely filled with adhesive.

In addition, the present invention relates to a method for producing an assembly of pipe parts, the pipe parts and/or components being provided in a suitable number and form and being combined to form an assembly by connecting a pipe socket situated on one pipe part or component to an insertion end situated on another pipe part or component, using for each pipe socket at least two sealing elements, which are located at an axial distance from one another, whereby an essentially closed chamber is formed by the shape of the pipe socket, which chamber is filled at least partly through a first opening in the wall of the pipe socket with a liquid adhesive which is solid under the operating conditions, and it being possible for any excess adhesive to escape via a second opening in the wall of the pipe socket. This method is characterized in that one or more pipe sockets according to one of the embodiments of the present invention are used and the essentially closed chamber is essentially completely filled with adhesive.

The present invention also relates to an assembly of pipe parts and/or components which is formed using the pipe joint according to the invention and by means of the method according to the invention. This assembly is characterized in that the material, of which the pipe parts and/or components, pipe socket and insertion end are manufactured, comprises polyvinyl chloride, polyethene or polypropene.

Finally, the present invention relates to a sealing element which is suitable for use in a pipe socket according to the invention. A sealing element of this kind is characterized in that the said pipe socket comprises an extruded profile section, part of which can be removed at one or more locations to obtain an opening.

The present invention will be explained in more detail below with reference to the appended drawing, in which:
- Figure 1 diagrammatically shows a cross-section of a detail of the pipe socket according to an embodiment of the present invention; and
- Figure 2 diagrammatically shows a cross-section of a detail of the pipe socket according to another embodiment of the invention;
- Figure 3 diagrammatically shows a cross-section of a detail of a pipe socket according to yet another embodiment of the invention; and
- Figure 4 diagrammatically shows a cross-section of a detail of a pipe socket according to still another embodiment of the invention.

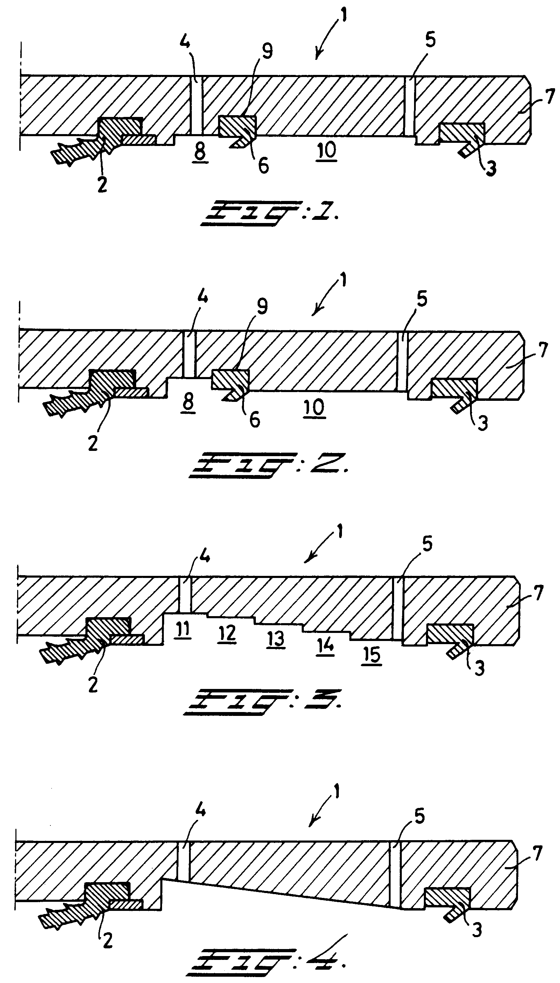

Figure 1 shows a pipe socket detail having, inter alia, two sealing elements 2 and 3. The sealing elements are situated on either side of the essentially closed chamber which is formed when the pipe socket is joined to the end of a pipeline. The sealing element 2 ensures a complete seal between the pipe socket and the end of the pipeline and also ensures that adhesive which is introduced into the essentially closed chamber cannot penetrate into the pipes. The sealing element 3 does not need to be highly sealing, but is used in particular to prevent the adhesive from running out of the chamber. In the vicinity of the axial delimitation of the essentially closed chamber, which in this case is formed by ribs of the pipe socket itself, but of course may also be formed by the sealing elements 2 and 3, the two openings 4 and 5, which respectively serve as an inlet opening for the adhesive to be introduced into the chamber and as a vent and/or indication opening for allowing the air present in the chamber to escape and indicating, due to adhesive running out, that the chamber is essentially filled with adhesive, are situated in the pipe socket.

In the embodiment which is shown in Figure 1, the means which determine the direction of flow comprise a groove 9 which is formed in the inner wall of the pipe socket and in which a third sealing element 6 is incorporated. The groove 9 is located between the two openings 4, 5 in the wall 7 of the pipe socket. The third sealing element 6 may be placed in the groove separately or may be moulded at the same time as the pipe socket. The third sealing element 6 divides the essentially closed chamber into a first part 8 and a second part 10. Due to the fact that the third sealing element is at least provided with an opening, the first part 8 and the second part 10 of the essentially closed chamber are connected to one another. In an advantageous embodiment, the first opening 4 and the second opening 5 in the wall 7 of the pipe socket 1 lie on one generatrix. Preferably, the third sealing element 6 is located or moulded onto the pipe socket such that the passage opening in the third sealing element 6 is situated on the side diametrically opposite the first opening 4 and the second opening 5. If, in this embodiment, adhesive is introduced through the first opening 4, this adhesive will first of all have to fill the first part 8 of the essentially closed chamber before it reaches the passage opening in the third sealing element 6. Only then can the adhesive flow through into the second part 10 of the essentially closed chamber. Due to this, actually forced flow of the adhesive, a gradual and controlled filling of essentially the entire closed chamber will be achieved partly by means of the hydrostatic pressure.

Preferably, the sealing elements 3 and 6 consist of an extruded profile section which is manufactured from rubber, thermoplastic rubber or, very advantageously, from polyethene or polypropene. A profile section of this kind is suitable for pipe sockets of different diameters, since the profile section can be sawn off at the correct length and can be positioned in the groove 9. Sections made of polyethene or polypropene are inexpensive to manufacture and are sufficiently effective for the intended purpose.

Very advantageously, the profile sections for the sealing elements 3 and 6 are identical to one another. The profile sections may, as shown in the Figures, for example be in the form of a sealing ring. By locally removing the lip at sealing element 6, or by incorporation of a surface profile of shorter length than the perimeter formed by the groove, e.g. an opening is obtained for the passage of the adhesive.

Figure 2 diagrammatically shows a pipe socket of the same kind as in Figure 1, with the difference that the cross-section of the first part 8 of the essentially closed chamber is larger than the second part 10 of the essentially closed chamber. In other words, the free radial cross-section of the essentially closed chamber decreases in the direction of the second opening 5 in the wall 7 of the pipe socket 1. In Figure 2, this free radial cross-section decreases stepwise; the decrease may, however, also be continuous.

Figure 3 shows an embodiment of a pipe socket according to the present invention in which the pipe socket is not provided with a groove 9 having a third sealing element 6, but in which only the free radial cross-section of the essentially closed chamber decreases in the direction of the second opening 5. In the case of Figure 3, this decrease takes place in a stepwise manner and, consequently, the essentially closed chamber which is formed on joining the pipe socket to an end of a pipeline is of stepped form.

The chamber may in the present case be divided into five sectors 11, 12, 13, 14 and 15. Naturally, the number of sectors may be either greater or less than five.

If, after the pipe socket has been joined to the end of a pipeline, liquid adhesive is introduced into the chamber through the inlet opening 4, and sector 11 will, as a consequence of the low resistance, the first to be essentially filled with adhesive. When sector 11 has been virtually completely filled, sector 12 and then sectors 13 to 15 inclusive will be filled with adhesive. As a result of the chamber being filled sector-by-sector or part-by-part, the air present in the chamber will be able to escape in a controlled manner and will not be trapped by the adhesive as air bubbles. Because the chamber between the inside of the pipe socket and the outside of the pipeline is relatively narrow in sector 15, the pressure in the adhesive will rise. When the chamber has essentially been filled with adhesive, the adhesive will run out of the air vent 5. This is an indication that the chamber is full.

The strength of the adhesive bond is determined by the axial length of the sectors 11 to 14 inclusive. Therefore the greater the length of the sectors, the stronger the bond. In the present figure, the two openings in the pipe socket, 4 and 5, are again situated on the same side and preferably at the top during assembly. However, this is not essential.

The adhesive used in the present invention is preferably a two-component epoxy adhesive or acrylate adhesive. This must be liquid, preferably as liquid as water, on introduction, in order to prevent premature curing.

Instead of a chemically curing adhesive as indicated above, the adhesive may also be a so-called hotmelt adhesive, such as a thermoplastic, which is liquid on introduction and solid under the operating conditions. Suitable thermoplastics are polyethene, polypropene and polyvinyl chloride.

Figure 4 shows a detail of a pipe socket of the same type as in Figure 3, but in this case the essentially closed chamber which is formed when the pipe socket is joined to one end of a pipeline has a conical course, i.e. decreases continuously in the direction of the second opening 5. Here too, the adhesive will be introduced into that part of the chamber which has the largest cross-section, while the adhesive running out of the opening in the pipe socket at that part of the chamber which has the smallest cross-section indicates that the chamber has essentially been completely filled with adhesive.

According to the invention, the pipe socket may be designed as a double pipe socket. As such, the pipe socket may, for example, be used to join together two pipelines. In particular, the double pipe socket can be used for high-strength joints in between pipelines having a relatively large diameter, such as the pipelines which are used as water mains.

## Claims

1. Pipe socket suitable to be connected to one end of a pipeline using at least two sealing elements (2, 3) which are positioned at an axial distance from one another and which can engage on the outer wall of the end of the pipeline, the pipe socket (1) having a shape which is such that, when interaction between the pipe socket and the end of the pipeline is realised, at least one essentially closed chamber is formed, which is delimited in the radial direction by the outer wall of the pipeline and the inner wall of the pipe socket and which is provided, in the region close to each of the sealing elements (2, 3), with an opening (4, 5) in the wall (7) of the pipe socket, and which chamber, for the purpose of forming a connection, can be at least partially filled via a first opening (4) with a liquid adhesive which is solid under the operating conditions of the pipeline, while it is possible for air and any excess of adhesive to escape via a second opening (5), characterized in that the pipe socket (1) comprises means which determine the direction of flow and which make it possible for the essentially closed chamber to be filled gradually and essentially completely with adhesive, starting at the location of the first opening (4).

2. Pipe socket according to claim 1, characterized in that the means which determine the direction of flow comprise a groove (9) formed between the openings (4, 5) in the inner wall of the pipe socket, in which groove a third sealing element (6) is incorporated which can engage on the outer wall of the end of the pipeline, which sealing element (6) divides the essentially closed chamber into a first part (8) and a second part (10), the sealing element (6) at least being provided with a passage opening, so that the first part (8) and the second part (10) of the essentially closed chamber are connected to one another.

3. Pipe socket according to claim 1 or 2, characterized in that the free radial cross-section of the essentially closed chamber decreases in the direction of the second opening (5) in the wall (7) of the pipe socket.

4. Pipe socket according to Claim 2, characterized in that the free radial cross-section of the essentially closed chamber decreases stepwise in the direction of the second opening (5) in the wall (7) of the pipe socket.

5. Pipe socket according to Claims 1-4, characterized in that the first and the second openings (4, 5) in the wall (7) of the pipe socket lie on one generatrix of the pipe socket.

6. Pipe socket according to Claim 5, reference being made at least to claim 2, characterized in that the passage opening of the sealing element is positioned essentially diametrically opposite the first and the second openings (4, 5) in the wall (7) of the pipe socket.

7. Pipe socket according to one or more of claims 1-6, characterized in that the pipe socket is produced essentially from a plastic, selected from the group consisting of polyvinyl chloride, polypropene and polyethene.

8. Pipe socket according to one or more of claims 1-7, characterized in that the pipe socket is designed as a double pipe socket.

9. Pipe joint, comprising a pipe socket at the end of a first plastic pipe or component and an insertion end at the end of a second plastic pipe or component, using at least two sealing elements (2, 3) which are located at an axial distance from one another and can engage on the outer wall of the end of the second plastic pipe or component, characterized in that the pipe socket is a pipe socket (1) according to one or more of claims 1-8, and in that the essentially closed chamber is essentially completely filled with adhesive.

10. Method for producing an assembly of pipe parts, the pipe parts and/or components being provided in a suitable number and form and being combined to form an assembly by connecting a pipe socket situated on one pipe part or component to an insertion end situated on another pipe part or component, using for each pipe socket at least two sealing elements (2, 3) which are located at an axial distance from one another, whereby an essentially closed chamber is formed by the shape of the pipe socket, which chamber is filled at least partly through a first opening (4) in the wall (7) of the pipe socket with a liquid adhesive which is solid under the operating conditions of the pipe-parts assembly, and it being possible for air and any excess adhesive to escape via a second opening (5) in the wall (7) of the pipe socket, characterized in that one or more pipe sockets (1) according to one or more of claims 1-8 are used, and the essentially closed chamber is essentially completely filled with adhesive.

11. Assembly of pipe parts and/or components which is formed using the pipe joint according to claim 9 and by means of the method according to claim 10, characterized in that the material of which the pipe parts and/or components, pipe socket and insertion end are manufactured, comprises polyvinyl chloride, polyethene or polypropene.

12. Sealing element which is suitable for use in a pipe socket according to one or more of claims 1-8, characterized in that the said pipe socket comprises an extruded profile section, a part of which can be removed at one or more locations to obtain an opening.
